(19) **Europäisches Patentamt**

**European Patent Office**

**Office européen des brevets**

(11) **EP 1 085 824 B2**

(12) **NOUVEAU FASCICULE DE BREVET EUROPEEN**

(45) Date de publication et mention de la décision concernant l'opposition:
**22.03.2006   Bulletin 2006/12**

(45) Mention de la délivrance du brevet:
**03.09.2003   Bulletin 2003/36**

(21) Numéro de dépôt: **99925091.3**

(22) Date de dépôt: **15.06.1999**

(51) Int Cl.:
*A23L 1/182* $^{(2006.01)}$    *A23L 1/168* $^{(2006.01)}$

(86) Numéro de dépôt international:
**PCT/FR1999/001420**

(87) Numéro de publication internationale:
**WO 1999/065333 (23.12.1999 Gazette 1999/51)**

(54) **RIZ ETUVE A CUISSON RAPIDE**

SCHNELLKOCHENDER PARBOILED-REIS

FAST COOKING PARBOILED RICE

(84) Etats contractants désignés:
**AT BE CH DE DK ES FI FR GB GR IE IT LI LU NL PT SE**

(30) Priorité: **17.06.1998   FR 9807628**

(43) Date de publication de la demande:
**28.03.2001   Bulletin 2001/13**

(73) Titulaire: **Lustucru Riz**
**69006 Lyon (FR)**

(72) Inventeurs:
 • **MINIER, Chantal**
   **F-13400 Aubagne (FR)**
 • **AREKION, Isabelle**
   **F-13013 Marseille (FR)**
 • **LEPEZ, Olivier**
   **F-95270 Viarmes (FR)**

(74) Mandataire: **Eidelsberg, Victor Albert**
**Cabinet Flechner**
**22, Avenue de Friedland**
**75008 Paris (FR)**

(56) Documents cités:
**EP-A- 0 393 870**          **EP-A- 0 475 643**
**EP-A- 0 972 452**          **WO-A-97/49300**
**WO-A-98/43496**          **GB-A- 1 092 836**

 • **DATABASE WPI Section Ch, Week 9810 Derwent Publications Ltd., London, GB; Class D13, AN 98-103971 XP002096475 & JP 09 322725 A (NIPPON SUISAN KAISHA LTD), 16 décembre 1997 (1997-12-16)**
 • **Luh B.S. "Rice : Volume II - Utilization", New York, 1991, pp. 51-53, 121-130, 144-146**
 • **Norme internationale ISO 6648**
 • **Biliaderis C. G. et al "Thermodynamical properties of milled rice starch as influenced by variety and parboiling method", Cereal Chemistry, 1993, 512-516**
 • **Biswas S.K. et al "Laboratory parboiling procedures and properties of parboiled rice from varieties differing in starch properties", Cereal Chemistry, 1988, 417-425**

EP 1 085 824 B2

**Description**

Le riz étuvé est un riz qui a subi un trempage, un traitement thermique, un séchage et souvent un usinage. Ce traitement permet-devoir notamment un riz non collant et dont les grains sont intacts, mais avec l'inconvénient que la durée de cuisson est longue. L'invention pallie cet inconvénient par un riz étuvé dont la durée de cuisson est très écourtée.

Parmi les riz à teneur en amylose par rapport à la matière sèche inférieure à 15% figurent notamment des variétés de riz parfumés de Thaïlande à teneur en amylose comprise en général entre 10% et 15%, qui ont été vendus jusqu'ici tels quels, juste blanchis pour mieux préserver tout leur arôme. Il y a beaucoup d'autres variétés de riz moins coûteuses pour faire de l'étuvage.

Suivant l'invention, on effectue l'étuvage sur du riz ayant une teneur en amylose par rapport à la matière sèche inférieure à 15% en poids et notamment comprise entre 10% et 15%.

On a constaté, d'une manière inattendue, que du riz étuvé ayant une teneur en amylose par rapport à la matière sèche inférieure à 15% en poids, que ce soit du riz cargo ou du riz paddy, peut, après avoir subi l'étuvage, être cuit en 5 minutes. On connaît des riz ayant une teneur en amylose inférieure à 10% qui conviennent aussi pour l'invention.

On peut de préférence préparer du riz étuvé apte à cuire rapidement en trempant le riz ayant une teneur en amylose inférieure à 15% en poids dans de l'eau à une température inférieure à 70°C, notamment entre 40 et 70°C dans des conditions et pendant une durée telle que l'on obtienne, après enlèvement de l'eau superficielle par égouttage ou essorage, du riz trempé ayant une teneur pondérale en humidité supérieure à 31%, en effectuant ensuite une gélatinisation du riz trempé en le portant à une température supérieure à 130°C tout en maintenant l'humidité à une teneur pondérale supérieure à 22% pendant une durée suffisante, par exemple d'au moins 8 minutes, pour obtenir du riz gélatinisé à coeur, et en effectuant la gélatinisation en faisant passer le riz trempé en continu dans une enceinte, de manière à limiter, par l'équilibre qui s'instaure dans l'enceinte entre la teneur en humidité du riz qui subit la gélatinisation et la teneur en humidité de l'atmosphère gazeuse de l'enceinte, la quantité de vapeur qui se dégage du riz pendant la gélatinisation pour maintenir l'humidité pondérale du riz en cours de gélatinisation à une valeur supérieure à 22% et en chauffant le riz trempé dans l'enceinte essentiellement par conduction, de manière à ne pas augmenter sensiblement la teneur pondérale en humidité du riz gélatinisé, et notamment à ne pas dépasser une teneur de 28%.

En effectuant un étuvage classique à la vapeur, on constate que ce type de riz cuit plus rapidement que les autres.

Les grains de riz étuvé ont la propriété suivante : les grains cuits, placés dans un récipient hermétiquement fermés et mis au réfrigérateur à 4°C pendant 6 jours ont une fermeté, mesurée au viscoélastographe, au plus égale à 120 % de celle qu'ils ont 15 minutes après la cuisson. Cette propriété est très recherchée notamment quand on doit préparer un mets à l'avance. Ils ne durcissent pas au refroidissement.

Les exemples suivants illustrent l'invention.

<u>Exemple 1</u>

600 kg de riz cargo Khao Dawk Mali parfumé sont placés dans une cuve et recouverts par 1500 litres d'eau à 65°C. Le riz est laissé en contact avec l'eau pendant 3 heures. L'eau de trempage est alors évacué et le riz est extrait gravitairement de la cuve et égoutté. Son humidité est alors égale à 31,4%. Il est ensuite convoyé à un débit de 100 à 600 kg/h (suivant divers essais qui ont tous donnés satisfaction) vers une enceinte qui est constituée d'un serpentin de 64 m de longueur et de 110 mm de diamètre intérieur et dont les parois ont été préalablement chauffées à 190°C. Le riz est transporté de l'entrée vers la sortie de l'enceinte par vibration à une vitesse de 7 m/minute. Son temps de séjour est de 8 minutes. Sa température atteinte à la sortie de l'enceinte est de 130°C. Son humidité est de 25,5%. Le cargo ainsi traité est ensuite transporté jusqu'à des colonnes de séchage à air chaud où son humidité est ramenée à 12,5 % pour sa conservation. Il est ensuite usiné selon le procédé traditionnel.

Le riz ainsi traité soumis au test à l'alcali présente 98 % de grains complètement translucides, c'est-à-dire complètement gélatinisés.

Le test à l'alcali s'effectué comme suit.

100 grains de riz étuvés sont placés dans une solution de KOH à 1,7 % en poids pendant 20 heures.

Au bout des 20 heures de réaction, on observe la dégradation subie par les grains

- grains intacts : grains non gélatinisés
- grains dispersés en une masse crayeuse opaque : grains peu gélatinisés
- grains dispersés complètement translucides, sans coeur opaque crayeux : grains totalement gélatinisés.

Sa densité est égale à 95 % de la densité du même grain usiné, mais non traité. Aucune fissure n'est visible à l'oeil ou à la loupe binoculaire.

Ce riz cuit pendant 5 minutes à l'eau bouillante et, refroidi pendant 15 minutes selon le protocole décrit ci-dessus, présente les caractéristiques de texture suivantes mesurées au viscoélastographe :

$$F_{moy} = 59.0 \text{ - écart-type sur 6 mesures} = 1.2$$

Le viscoélastographe Chopin permet d'évaluer les caractéristiques viso-élastiques du riz cuit en appréciant sa déformation sous l'application d'une force constante de 700g pendant 20 secondes puis relâchement de la force pendant 40 secondes.

Pour la mesure au viscoélastographe, 100g de riz sont cuits dans un litre d'eau bouillante. A la fin de la cuisson, les grains sont égouttés pendant une minute sur un tamis d'ouverture 1,25 mm puis mis à refroidir pendant 15 minutes dans une boîte de Pétri de 60 mm placée sur une plaque éponge humide et recouverte par une boîte de Pétri de 80 mm de façon que cette dernière crée un joint étanche avec l'eau qui imbibe la plaque éponge. Trois grains ainsi refroidis sont ensuite placés sur le viscoélastographe. On note l'épaisseur E des grains avant application de la force et l'épaisseur $e_1$ après écrasement. A partir de ces valeurs, on calcule la fermeté $F = 100.(e_1/E)$. Six mesures sont effectuées sur la même cuisson pour calculer la moyenne et l'écart-type sur les six résultats obtenus.

Exemple 2

Un lot de grains de riz ayant une teneur en amylose de 13,4% variété Khao Dawk Mali, est étuvé par le même procédé qu'à l'exemple 1, cuit pendant 10 minutes, égoutté pendant une minute, placé dans un récipient fermé hermétiquement puis mis au réfrigérateur à 4°C pendant 6 jours. On mesure la fermeté des grains à l'aide du viscoélastographe 15 minutes après cuisson et après les six jours au réfrigérateur.
15 minutes après cuisson : F = 34.7
après 6 jours à 4°C: F = 38.8
Le fermeté des grains après six jours à 4°C est égale à 112% de celle mesurée 15 minutes après cuisson.

Exemple comparatif 1

Au contraire de l'exemple 2, un lot de grains de riz de la même variété Khao Dawk Mali, non étuvé, mais simplement blanchi cuit pendant 11 minutes et conservé six jours à 4°C a une fermeté égale à 171% de la fermeté mesurée 15 minutes après cuisson.
15 minutes après cuisson : F = 37.9
après six jours à 4°C : F = 64.8

Exemple comparatif 2

De la même façon, un lot de grains de riz de la variété Thaï Bonnet ayant une teneur en amylose de 26%, étuvé comme à l'exemple 1, et cuit pendant dix minutes puis conservé six jours à 4°C, a une fermeté égale à 161 % de la fermeté mesurée après cuisson.
15 minutes après cuisson : F = 48.3
après six jours à 4°C : F = 77.8

Exemple 3

1kg de cargo Khao Dakw Mali de teneur en amylose égale à 13,4% est trempé à 65°c pendant 3 heures, puis égoutté et soumis à un traitement à la vapeur sous pression de 1 bar pendant 5 mn. L'humidité du riz ainsi traité est supérieure à 31 %. Le riz est ensuite séché, puis usiné. Ce riz étuvé a un temps de cuisson de 8 mn.

Exemple comparatif 3

1 kg de cargo Thaï-Bonnet de teneur en amylose égale à 27% ettraité de la même façon qu'à l'exemple 3 a un temps de cuisson de 10 mn.

**Revendications**

1. Utilisation de riz ayant une teneur en amylose inférieure à 15% en poids par rapport à la matière sèche pour préparer du riz étuvé apte à cuire en cinq minutes.

2. Procédé de préparation de riz étuvé apte à cuire en cinq minutes, **caractérisé en ce qu'**il consiste à effectuer l'étuvage sur du riz ayant une teneur en amylose par rapport à la matière sèche inférieure à 15% en poids.

3. Procédé suivant la revendication 2, **caractérisé en ce que** la teneur en amylose est comprise entre 10% et 15% en poids par rapport à la matière sèche.

4. Procédé suivant la revendication 2 ou 3, **caractérisé en ce qu'**il consiste à tremper le riz ayant une teneur en amylose inférieure à 15% en poids dans de l'eau à une température inférieure à 70°C, notamment entre 40 et 70°C dans des conditions et pendant une durée telle que l'on obtienne, après enlèvement de l'eau superficielle par égouttage ou essorage, du riz trempé ayant une teneur pondérale en humidité supérieure à 31 %, à effectuer ensuite une gélatinisation du riz trempé en le portant à une température supérieure à 130°C tout en maintenant l'humidité à une teneur pondérale supérieure à 22% pendant une durée suffisante, par exemple d'au moins 8 minutes, pour obtenir du riz gélatinisé à coeur, et à effectuer la gélatinisation en faisant passer le riz trempé en continu dans une enceinte, de manière à limiter, par l'équilibre qui s'instaure dans l'enceinte entre la teneur en humidité du riz qui subit la gélatinisation et la teneur en humidité de l'atmosphère gazeuse de l'enceinte, la quantité de vapeur qui se dégage du riz pendant la gélatinisation pour maintenir l'humidité pondérale du riz en cours de gélatinisation à une valeur supérieure à 22% et en chauffant le riz trempé dans l'enceinte essentiellement par conduction, de manière à ne pas augmenter sensiblement la teneur pondérale en humidité du riz gélatinisé, et notamment à ne pas dépasser une teneur de 28%.

5. Riz étuvé, **caractérisé en ce qu'**il a une teneur en amylose par rapport à la matière sèche inférieure à 15% en poids et le riz est du Khao Dawk Mali, du Miara ou Hom Mali.

6. Riz suivant la revendication 5, **caractérisé en ce que** les grains de riz, cuits, placés dans un récipient hermétiquement fermés et mis au réfrigérateur à 4°C pendant 6 jours ont une fermeté, mesurée au viscoélastographe, au plus égale à 120 % de celle qu'ils ont 15 minutes après la cuisson.

7. Utilisation suivant la revendication 1, **caractérisé en ce que** le riz est du Khao Dawk Mali, du Miara ou Hom Mali.

8. Procédé suivant la revendication 4, **caractérisé en ce que** le riz est du Khao Daw Mali, du Miara ou Hom Mali.

**Claims**

1. Use of rice having an amylose content lower than 15 % by weight, relative to dry matter, in order to prepare parboiled rice that is suitable for cooking in five minutes.

2. A process for preparing parboiled rice that is suitable for cooking in five minutes, **characterised in that** said process consists in carrying out parboiling in respect of rice having an amylose content lower than 15 % by weight, relative to dry matter.

3. Process according to Claim 2, **characterised in that** the amylose content amounts to between 10 % and 15 % by weight, relative to dry matter.

4. Process according to Claim 2 or 3, **characterised in that** it consists in steeping the rice having an amylose content lower than 15 % by weight in water at a temperature lower than 70 EC, in particular between 40 EC and 70 EC, under such conditions and for such a time that, after removal of the surface water by drainage or spin-drying, steeped rice is obtained having a moisture content by weight greater than 31 %, in afterwards carrying out a gelatinisation of the steeped rice by heating it to a temperature greater than 130 EC while maintaining the moisture at a weight content greater than 22 % for a sufficient period, for example a period of at least 8 minutes, to obtain core-gelatinised rice, and in carrying out gelatinisation by causing the steeped rice to pass continuously into an enclosure so as to limit, by virtue of the equilibrium which is established within the enclosure between the moisture content of the rice which is undergoing gelatinisation and the moisture content of the gaseous atmosphere of the enclosure, the quantity of vapour emitted from the rice during gelatinisation, in order to maintain the moisture content by weight of the rice in the course of gelatinisation at a value greater than 22 %, and by heating up the steeped rice in the enclosure essentially by conduction so as not to increase the moisture content by weight of the gelatinised rice appreciably, and in particular so as not to exceed a content of 28 %.

5. Parboiled rice, **characterised in that** it has an amylose content lower than 15 % by weight and that the rice is of the variety Khao Dawk Mali, Miara or Horn Mali.

6. Rice according to Claim 5, **characterised in that** the grains of rice that have been cooked, placed in a hermetically sealed container and put in the refrigerator at 4 EC for 6 days have a firmness, measured in the visco-elastograph, at most equal to 120 % of that which they have 15 minutes after cooking.

7. Use according to Claim 1, **characterised in that** the rice is of the variety Khao Dawk Mali, Miara or Horn Mali.

8. Process according to Claim 4, **characterised in that** the rice is of the variety Khao Dawk Mali, Miara or Horn Mali.

**Patentansprüche**

1. Verwendung von Reis, welcher einen auf die Trokkensubstanz bezogenen Amylosegehalt unter 15 Gew.-% hat, zur Herstellung von Parboiledreis, der die Eigenschaft aufweist, dass er binnen fünf Minuten gekocht werden kann.

2. Verfahren zur Herstellung von Parboiledreis, geeignet zum Kochen in fünf Minuten, **dadurch gekennzeichnet, dass** dieses Verfahren darin besteht, die Parboiling-Behandlung an einem Reis durchzuführen, welcher einen auf die Trockensubstanz bezogenen Amylosegehalt von weniger als 15 Gew.-% aufweist.

3. Verfahren nach Anspruch 2, **dadurch gekennzeichnet, dass** der auf die Trockensubstanz bezogene Amylosegehalt zwischen 10 und 15 Gew.-% beträgt.

4. Verfahren nach Anspruch 2 oder 3, **dadurch gekennzeichnet, dass** es darin besteht, dass man den Reis, der einen Amylosegehalt unter 15 Gew.-% hat, in Wasser bei einer Temperatur unter 70 °C, insbesondere zwischen 40 und 70°C, unter solchen Bedingungen und über einen solchen Zeitraum wässert, dass man nach dem Entfernen des an der Oberfläche befindlichen Wassers durch Abtropfenlassen oder Trockenschleudern gewässerten Reis erhält, der einen gewichtsbezogenen Gehalt an Feuchtigkeit über 31 % aufweist,

anschließend eine Gelatinierung des gewässerten Reises durchführt, indem man ihn auf eine Temperatur über 130 °C bringt, wobei man die Feuchtigkeit über eine ausreichend lange Zeitspanne, beispielsweise mindestens 8 Minuten, auf einem gewichtsbezogenen Gehalt über 22 % hält, um einen durch und durch gelatinierten Reis zu erhalten, und

die Gelatinierung auf eine Weise durchführt, bei welcher man den gewässerten Reis kontinuierlich einen Reaktionsraum dergestalt durchlaufen lässt, dass man durch das Gleichgewicht, das sich in dem Reaktionsraum zwischen dem Gehalt an Feuchtigkeit des Reises, welcher der Gelatinierung unterzogen wird, und dem Gehalt an Feuchtigkeit der Gasatmosphäre des Reaktionsraums, einstellt, die Menge an Dampf, die aus dem Reis während der Gelatinierung austritt, begrenzt, um die gewichtsbezogene Feuchtigkeit des Reises im Laufe der Gelatinierung auf einem Wert über 22 % zu halten, und man den gewässerten Reis in dem Reaktionsraum im Wesentlichen durch Wärmeleitung dergestalt erhitzt, dass sich der gewichtsbezogene Gehalt an Feuchtigkeit des gelatinierten Reises nicht deutlich erhöht und insbesondere einen Wert von 28 % nicht überschreitet.

5. Parboiledreis, **dadurch gekennzeichnet, dass** er einen auf die Trockensubstanz bezogenen Amylosegehalt unter 15 Gew.-% aufweist, wobei es sich um Reis aus Khao Dawk Mali, Miara oder Hom Mali handelt.

6. Reis nach Anspruch 5, **dadurch gekennzeichnet, dass** die Körner des Reises, gekocht, in ein hermetisch abgeschlossenes Gefäß gebracht und über einen Zeitraum von 6 Tagen in einen Kühlschrank bei 4 °C gestellt, eine mit dem Viskoelastografen gemessene Festigkeit von höchstens 120 % des Wertes haben, den sie 15 Minuten nach dem Kochen haben.

7. Verwendung nach Anspruch 1, **dadurch gekennzeichnet, dass** es sich um Reis aus Khao Dawk Mali, Miara oder Hom Mali handelt.

8. Verfahren nach Anspruch 4, **dadurch gekennzeichnet, dass** es sich um Reis aus Khao Dawk Mali, Miara oder Hom Mali handelt.